# NOUVEAU FASCICULE DE BREVET EUROPEEN

(11) **EP 2 630 555 B2**
(45) Date de publication et mention de la décision concernant l'opposition: **01.06.2022**
(45) Mention de la délivrance du brevet: 08.05.2019
(21) Numéro de dépôt: 11785042.0
(22) Date de dépôt: 20.10.2011
(51) Int. Cl.: G06F 3/01, H02K 33/16, B06B 1/04, G05G 5/03, G05G 5/06, G08B 6/00, H02K 7/14, G06F 3/0354

(54) **MODULE D'INTERFACE TACTILE À RETOUR HAPTIQUE**
BERÜHRUNGSEMPFINDLICHES SCHNITTSTELLENMODUL MIT HAPTISCHER RÜCKKOPPLUNG
HAPTIC FEEDBACK TOUCH-SENSITIVE INTERFACE MODULE

(30) Priorité: 20.10.2010 FR 1004115
(43) Date de publication de la demande: 28.08.2013
(73) Titulaire: DAV, 94046 Créteil Cedex (FR)
(72) Inventeur: TISSOT, Jean-Marc, 74250 Viuz en Sallaz (FR)
(74) Mandataire: Pothmann, Karsten
(86) Numéro de dépôt international: PCT/FR2011/000567
(87) Numéro de publication internationale: WO 2012/052635

(56) Documents cités:
- EP-A1- 1 310 860
- EP-A1- 1 429 299
- WO-A1-03/044929
- WO-A2-2006/074184
- WO-A2-2007/002775
- JP-A- 11 162 277
- US-A- 5 682 132
- US-A- 6 001 014
- US-A1- 2005 184 601
- US-A1- 2006 109 256
- US-B2- 7 215 320

## Description

La présente invention concerne un module d'interface tactile, comme connu du EP 1 310 860 A, pour véhicule automobile, permettant notamment de transmettre un retour haptique à un utilisateur, tel qu'un retour vibratoire.

Dans le domaine automobile, des modules de commande multifonction, réalisés par exemple sous la forme d'un joystick ou d'un bouton rotatif, sont de plus en plus utilisés pour commander des systèmes électriques ou électroniques, tels qu'un système de climatisation, un système audio ou encore un système de navigation.

De tels modules peuvent être associés à un écran d'affichage et permettre une navigation dans des menus déroulants comportant différentes commandes relatives aux systèmes à commander.

Cependant, la présence de fonctions de plus en plus nombreuses et complexes entraîne une multiplication de ces modules. Aussi, pour augmenter le confort ergonomique, l'utilisation d'un module d'interface à surface tactile, au niveau d'une surface de commande ou bien d'un écran tactile, est considérée comme un développement intéressant.

Lorsqu'un utilisateur exerce une pression sur la surface tactile d'un tel capteur, on peut mesurer la pression appliquée et/ou déterminer la localisation de l'endroit où la pression est exercée. Dans ce cas, un appui de l'utilisateur est par exemple associé à la sélection d'une commande.

En outre, pour signaler à l'utilisateur que sa commande a bien été prise en compte, notamment en conduite de nuit ou lors d'une manipulation en aveugle, il est important que l'utilisateur ait un retour haptique de manière à rester concentré sur la route.

Pour cela, on connaît déjà des modules de commande à retour haptique comportant des actionneurs, tels que des actionneurs électromagnétiques, reliés au module d'interface pour transmettre un mouvement de vibration, de manière que l'utilisateur perçoive un retour haptique l'informant que sa commande a bien été prise en compte.

Ces actionneurs électromagnétiques comportent une bobine et un ou plusieurs aimants mobiles en translation par rapport à la bobine. En alimentant la bobine, les aimants sont mis en mouvement, et ce mouvement est transmis à la surface tactile.

Un second montage, appelé "voice-coil", "bobine de voix" puisqu'associé aux haut-parleurs, s'obtient en montant à l'inverse la bobine mobile par rapport à un ou plus aimants relativement fixes.

Cependant, lorsque les noyaux mobiles arrivent en bout de course, ils heurtent des butoirs ou bien le châssis de l'actionneur. Ces chocs répétés, outre le bruit indésirable qu'ils produisent, contribuent à l'usure des pièces. Ils diminuent ainsi l'efficacité du retour haptique et peuvent à terme rendre nécessaire le remplacement de tout ou partie de l'actionneur.

Pour pallier à ce défaut, il est connu d'implémenter des éléments amortisseurs, entre les pièces appelées à s'entrechoquer. Cependant, du fait même de leur fonction d'amortisseurs, ces pièces absorbent de l'énergie qui aurait servi à la mise en mouvement. Cette absorption d'énergie diminue donc le rendement global de l'actionneur.

L'invention propose notamment d'améliorer le rendement, mesuré grâce à l'accélération fournie à la surface tactile, tout en évitant les chocs entre les pièces mécaniques de l'actionneur.

À cet effet, l'invention a pour objet un module d'interface tactile à retour haptique comprenant une surface tactile apte à détecter un appui d'un utilisateur, et au moins un actionneur relié à la surface tactile, apte à générer un retour haptique en fonction de l'appui détecté et comprenant :
- un châssis,
- un noyau mobile coopérant avec le châssis, destiné à être entraîné en mouvement entre des positions extrémales pour générer le retour haptique, et
- des moyens d'actionnement électromagnétiques pour entraîner en mouvement le noyau mobile ;
et dont l'actionneur comporte en outre un premier et un second moyens élastiques précontraints, respectivement disposés de part et d'autre du noyau mobile.

L'actionneur d'un tel module d'interface à retour haptique combine un dispositif électromagnétique et un dispositif mécanique couplés.

On réalise ainsi un module d'interface tactile à retour haptique avec un faible encombrement dont l'actionneur haptique ne présente pas de pièces s'entrechoquant, sans pour autant que le rendement en soit diminué. Pour un même volume et une même énergie électrique fournie, le ressenti haptique est plus important.

Le module d'interface tactile à retour haptique peut en outre comporter une ou plusieurs caractéristiques, prises séparément ou en combinaison parmi celles qui suivent.

Les premier et second moyens élastiques définissent une position de repos flottante du noyau mobile.

Les premier et second moyens élastiques comportent des ressorts hélicoïdaux.

Les premier et second moyens élastiques comportent des lames ressort.

Les premier et second moyens élastiques comportent un matériau élastique tel que de l'uréthane, un polymère expansé, un polymère réticulé ioniquement, ou du caoutchouc.

Les premier et second moyens élastiques sont alignés sur l'axe qui est parallèle à la direction du mouvement du noyau mobile et qui passe par son centre de gravité.

Les premier et second moyens élastiques sont précontraints en compression.

Le noyau mobile comporte au moins un aimant, et le châssis comporte une bobine.

Le châssis est solidaire de la surface tactile, le premier moyen élastique est relié à la surface tactile d'une part et au noyau mobile d'autre part, et le second moyen élastique est relié au châssis d'une part et au noyau mobile d'autre part.

Le châssis comporte un couvercle solidaire de la surface tactile, et le premier moyen élastique de l'actionneur est relié au couvercle d'une part et au noyau mobile d'autre part, et le second moyen élastique est relié au châssis d'une part et au noyau mobile d'autre part.

Le module d'interface comporte un bâti solidaire du châssis, recevant la surface tactile et l'actionneur, et le premier moyen élastique de l'actionneur est relié à la surface tactile d'une part et au noyau mobile d'autre part, et le second moyen élastique est relié au châssis d'une part et au noyau mobile d'autre part.

Les premier et second moyens élastiques ont des raideurs différentes.

Le noyau mobile et le châssis comportent des moyens de guidage par coopération de forme.

Le module d'interface comporte une pluralité d'actionneurs et un contrôleur commun pour leur actionnement.

D'autres caractéristiques et avantages de l'invention ressortiront de la description suivante, donnée à titre d'exemple et sans caractère limitatif, en regard des dessins annexés sur lesquels :
- la figure 1 montre schématiquement une vue en coupe transversale d'un module d'interface selon un mode de réalisation dit "suspendu", où l'actionneur forme un bloc isolé, fixé à la surface tactile à mettre en mouvement;
- la figure 2 montre schématiquement une vue en coupe d'une variante du mode de réalisation suspendu, où un moyen élastique de l'actionneur est en contact direct avec la surface tactile à mettre en mouvement;
- la figures 3 est une vue en perspective d'une autre variante d'un actionneur de module d'interface à retour haptique, selon un mode de réalisation suspendu, en éclaté ;
- la figure 4 montre l'actionneur de la figure 3 monté sur la surface tactile à mettre en mouvement ; et
- la figure 5 montre schématiquement une vue en coupe d'un mode de réalisation de module d'interface tactile alternatif dit "lié", où l'actionneur est en contact avec la surface tactile et le bâti du module ;
- la figure 6 montre un module d'interface tactile pourvu d'une multitude d'actionneurs reliés à un contrôleur commun.

Sur toutes les figures, les mêmes éléments portent les mêmes numéros de référence.

L'invention concerne un module d'interface tactile à retour haptique 1, par exemple pour un tableau de commande de véhicule automobile, ou encore pour une console centrale de véhicule automobile, permettant de commander des systèmes électriques ou électroniques du véhicule, et pouvant transmettre un retour haptique à un utilisateur ayant par exemple modifié ou sélectionné une commande de manière à assurer à l'utilisateur la prise en compte de la commande modifiée ou sélectionnée.

Le module d'interface comprend une surface tactile 3, par exemple utilisant une technologie capacitive, ou de résistances sensibles à la pression (Force Sensing Resistor, FSR), pour détecter la localisation du doigt d'un utilisateur sur une position de sa surface correspondant à une commande. Il est aussi possible d'utiliser un écran tactile, transparent et superposé à un écran d'affichage, fonctionnant par exemple par détection des ondes de surface.

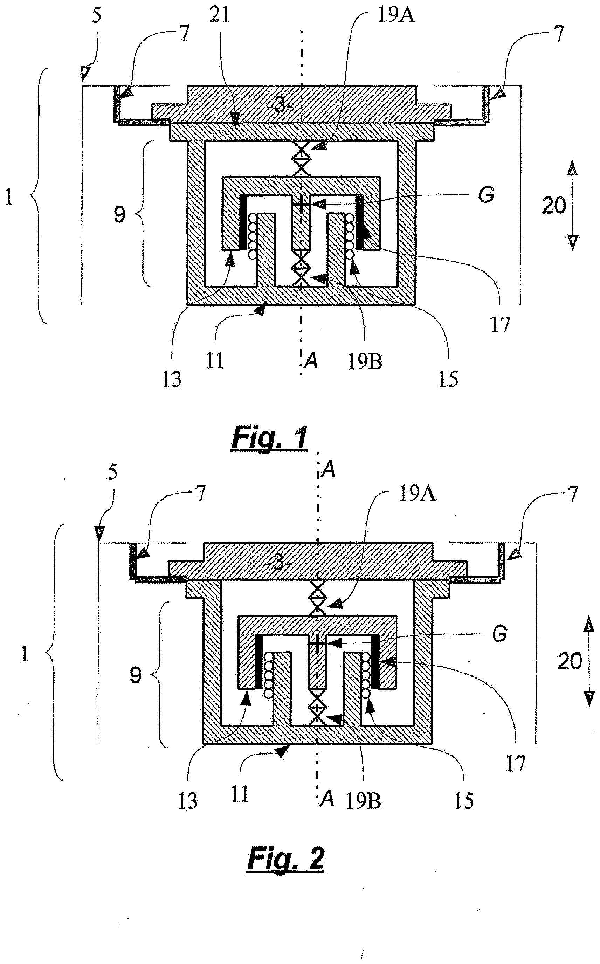

Sur la figure 1, la surface tactile est liée de manière flottante au bâti 5 du module d'interface tactile 1. La liaison entre la surface 3 et le bâti 5 se fait par une liaison 7 de type membrane semi-rigide, ou tout autre moyen de fixation permettant des mouvements limités, notamment en vibration le long de l'axe perpendiculaire à la surface tactile 3.

La surface tactile 3 est reliée à un actionneur 9 qui provoque le retour haptique lors de la détection de l'appui de l'utilisateur. Cet actionneur 9 comporte d'une part un châssis 11, rendu solidaire de la surface tactile 3, et un noyau mobile 13 coopérant avec le châssis.

Le noyau mobile 13, logé dans le châssis 11 est mis en mouvement entre des positions extrémales par des moyens d'actionnement électromagnétiques 15, 17. Lors de ce mouvement de va-et-vient, le noyau alterne des phases d'accélération et de décélération, lors desquelles le noyau mobile 13 entraîne la mise en mouvement de la surface tactile 3, et donc le retour haptique.

En outre, l'actionneur 9 comporte un premier et un deuxième moyens élastiques 19A et 19B précontraints, de part et d'autre du noyau mobile 13. Le noyau mobile 13 est pris entre ce premier 19A et ce second 19B moyens élastiques précontraints, l'un 19A situé entre la surface tactile 3 et le noyau mobile 13, l'autre 19B entre ledit noyau mobile 13 et le châssis 11.

Ainsi, les moyens élastiques 19A et 19B assistent les moyens d'actionnement électromagnétiques 13, 17 en ce qu'ils stockent une partie de l'énergie cinétique communiquée au noyau mobile lors de ses phases de décélération sous forme d'énergie potentielle élastique, pour ensuite la restituer lors des phases d'accélération.

Les moyens élastiques 19A et 19B précontraints peuvent définir en l'absence d'alimentation de la bobine une position de repos du noyau mobile 13, position dans laquelle les forces exercées par chacun des moyens élastiques 19A et 19B se compensent. La disposition des moyens élastiques 19A et 19B fait que cette position de repos est flottante : le noyau mobile 13 n'est en contact avec aucun autre composant de l'actionneur que lesdits moyens élastiques 19A et 19B.

Les moyens élastiques 19A et 19B peuvent être des ressorts hélicoïdaux ou des lames ressort.

Il est aussi possible d'utiliser un matériau élastique, tel qu'un polymère expansé de type uréthane, un ionomère (polymère réticulé ioniquement), ou du caoutchouc.

Enfin, un des moyens élastiques 19A ou 19B peut être composé d'une combinaison des modes de réalisation précédemment énumérés.

Un exemple de mode de réalisation place les moyens élastiques 19A et 19B de manière alignée sur l'axe *A-A,* qui est parallèle à la direction du mouvement du noyau mobile 13, matérialisée par la flèche 20, et qui passe par le centre de gravité *G* dudit noyau mobile 13. Ainsi, ils ne génèrent aucun couple sur le noyau mobile 13. Ceci a pour effet d'éviter la mise en rotation dudit noyau mobile 13, qui peut impliquer qu'il se coince ou bien qu'il heurte d'autres pièces mécaniques.

En particulier, selon une variante non représentée, on peut prévoir que l'un des moyens élastiques 19A ou 19B est composé de plusieurs éléments élastiques, et que ceux-ci sont régulièrement répartis autour de l'axe *A-A,* afin que la somme des couples qu'ils exercent sur le noyau mobile soit nulle.

Le présent mode de réalisation décrit l'utilisation de moyens élastiques 19A et 19B précontraints en compression, cependant l'utilisation de moyens élastiques 19A et 19B précontraints en extension est également possible.

Pour réaliser les moyens d'actionnement électromagnétiques 15, 17, le châssis 11 porte une bobine 15 pouvant fournir un champ magnétique et le noyau mobile porte au moins un aimant 17, préférentiellement plusieurs, disposés au plus près de la bobine et libres en translation le long de l'axe *A-A.*

Il est également possible de réaliser le montage inverse, la bobine 15 étant alors solidaire du noyau mobile 13 et le ou les aimants 17 étant alors solidaires du châssis 11.

La figure 1 montre un mode de réalisation d'un actionneur dit "suspendu". Par suspendu, on entend que l'actionneur 9 n'est pas relié au bâti 5 du module d'interface tactile 1, et le châssis 11 est solidaire de la surface tactile 3.

Dans le montage suspendu c'est le noyau mobile 13 qui met en mouvement la surface tactile 3 pour générer le retour haptique.

Le châssis 11 présente un couvercle 21 faisant support pour la fixation à la surface tactile 3. Le châssis 11 forme un réceptacle accueillant le reste de l'actionneur 9. Le premier moyen élastique 19A de l'actionneur est relié au couvercle 21 du châssis 11 d'une part et au noyau mobile 13 d'autre part, et le second moyen élastique 19B est relié au châssis 11 d'une part et au noyau mobile 13 d'autre part.

L'actionneur 9 forme alors un bloc fonctionnel bien défini, aisément montable et démontable du module d'interface 1. En effet, ce bloc fonctionnel est simplement vissé ou clipsé à la surface tactile 3, et peut donc être interchangé rapidement, sans que les moyens élastiques 19A et 19B aient à être manipulés.

Il est cependant envisageable de réaliser une variante de ce montage, montrée en figure 2, où le châssis 11, n'ayant pas de couvercle 21, est ouvert sur sa partie supérieure, et où le premier moyen élastique 19A de l'actionneur 9 est relié directement à la surface tactile 3 d'une part et au noyau mobile 13 d'autre part, et le second moyen élastique 19B est relié au châssis 11 d'une part et au noyau mobile 13 d'autre part.

Selon un exemple de réalisation, on prévoit que le châssis 11 et le noyau mobile 13 comportent des moyens de guidage 13, 33 par coopération de forme. À cette fin, le noyau mobile 13 présente une section en E dont la branche centrale est enchâssée dans une portion à section en U correspondante du châssis 11.

Les moyens élastiques 19A et 19B, par leur raideur pouvant être modifiée, permettent de réaliser différentes formes de vibrations de la surface tactile 3. Il est donc possible de générer différents retours haptiques qui peuvent servir à signifier à l'utilisateur autant d'informations variées : la prise en compte de la sélection, ou au contraire son rejet, ou bien la détection d'une saisie erronée.

En particulier, les moyens élastiques 19A et 19B de part et d'autre du noyau mobile 13 peuvent avoir une raideur différente, afin que le mouvement dudit noyau mobile 13 soit fortement asymétrique par rapport à la position de repos.

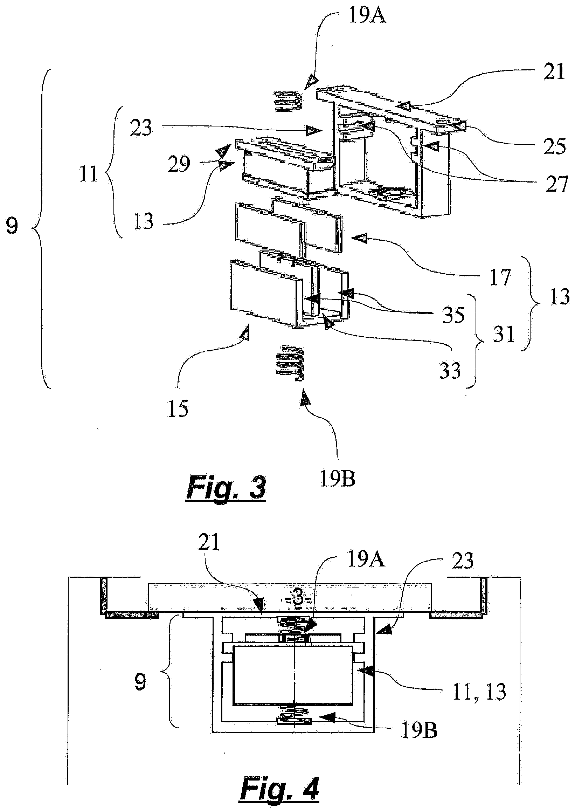

Les figures 3 et 4 représentent une autre variante de réalisation d'un actionneur 9 suspendu.

Le châssis 11 est composé de deux parties : une bobine 15 et un support fixe 23. Le support fixe 23, forme un cadre et entoure la bobine 15. Il accueille aussi les autres pièces de l'actionneur 9. Il présente sur sa partie supérieure formant couvercle 21 deux préperçages 25, dans lesquels sont logées des vis de maintien qui le fixent à la surface tactile 3. En son intérieur, il présente deux sites d'encliquetage 27, destinés à être en prise avec deux languettes 29 complémentaires sur les côtés de la bobine 15, afin de maintenir celle-ci en place, comme vu sur la figure 4.

Le noyau mobile 13 comporte deux aimants 17, qui sont maintenus en vis-à-vis des côtés de la bobine 15, et un support d'aimants 31, auxquels sont fixés les aimants 17 par clipsage ou collage. Le support d'aimants 31 a une section transversale en E, dont la branche centrale 33 est enchâssée dans la bobine 15 en dépassant légèrement à chaque extrémité de la bobine 15. Les deux branches latérales 35 portent les aimants 17.

Les moyens élastiques 19A et 19B sont composés de deux ressorts hélicoïdaux, appuyant sur la branche centrale 33 de la section en E du support d'aimants 31. Les ressorts hélicoïdaux 19A et 19B sont maintenus comprimés par le support 23 du châssis 11, qui accueille les pièces précédemment décrites dans un logement dont la hauteur est inférieure à la somme des longueurs des ressorts hélicoïdaux 19A et 19B à l'état non contraints, additionnée de la hauteur du noyau mobile 13.

Lors de l'assemblage, l'ensemble bobine 15, noyau mobile 13 et ressorts 19A et 19B est d'abord assemblé séparément, puis comprimé pour précontraindre les ressorts 19A et 19B. Enfin il est inséré dans le support fixe 23 par l'une des ouvertures latérales dudit support fixe.

L'actionneur 9 ainsi assemblé est ensuite vissé sur la surface interne ou arrière de la surface tactile 3, comme vu sur la figure 4.

En fonctionnement, la bobine 15 reçoit un signal en réponse à la détection d'un appui sur la surface tactile 3. Ce signal est, par exemple, soit un courant alternatif soit un train d'impulsions.

Lorsque la bobine 15 est alimentée par le courant du signal, elle exerce une force électromagnétique sur les aimants 17. Ceux-ci sont mis en mouvement, et entraînent avec eux le support d'aimants 31 avec lequel ils forment le noyau mobile 13.

Le noyau mobile 13 s'écarte d'une position de repos dans laquelle les forces qu'exercent sur lui les ressorts 19A et 19B se compensaient. De la sorte, par rapport à la position de repos, l'un des ressorts 19A ou 19B est comprimé, tandis que l'autre est relâché. Les ressorts 19A et 19B exercent ainsi une première force s'opposant au mouvement du noyau mobile 13 et une seconde force, de réaction sur le support fixe 23, qui est transmise à la surface tactile 3 et génère le retour haptique.

De fait, le noyau mobile 13 oscille entre des positions extrémales. Une moindre partie de l'énergie apportée électriquement sert donc à compenser l'énergie cédée à la surface tactile 3 pour la mettre en mouvement, et à compenser les pertes par frottements, que le montage tend à réduire au maximum.

En permettant l'oscillation du noyau mobile 13 entre des positions extrémales, les deux ressorts 19A et 19B évitent la perte d'énergie que représentent les chocs, même amortis, du noyau mobile 13 contre les autres pièces. L'invention permet donc la réalisation d'un actionneur 9 compact, simple à assembler et à monter sur une surface tactile 3, qui fournit, à volume égal et consommation égale, un plus grand ressenti haptique.

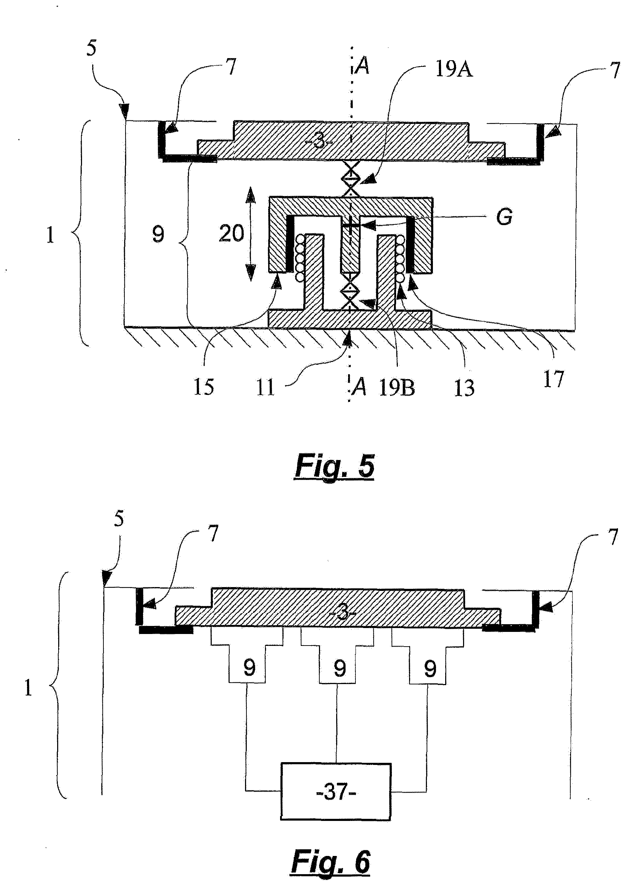

Selon un second mode de réalisation, représenté sur la figure 5, il est prévu l'utilisation d'un actionneur 9 dit "lié". Par lié on entend que l'actionneur est pas relié au bâti 5 du module d'interface tactile 1, via le châssis 11. Le premier moyen élastique 19A de l'actionneur est relié à la surface tactile 3 d'une part et au noyau mobile 13 d'autre part, et le second moyen élastique 19B est relié au châssis 11 d'une part et au noyau mobile 13 d'autre part.

Dans ce mode de réalisation, le noyau mobile exerce via le second moyen élastique et le châssis une réaction sur le bâti. Son fonctionnement est analogue au mode de réalisation précédemment décrit.

Par ailleurs, en référence à la figure 6, on peut prévoir plusieurs actionneurs 9 pour un module d'interface 1, tous reliés à un unique contrôleur commun 37 qui permet de les actionner selon des motifs impliquant un ou plusieurs desdits actionneurs 9, pour générer une gamme de retours haptiques encore plus variée .

Par exemple, deux actionneurs 9 situés à deux extrémités opposées de la surface tactile 3, peuvent voir leurs noyaux mobiles 13 entraînés de sorte à osciller entre leurs positions extrémales en opposition de phase mutuellement. Ceci conduit à un balancement de la surface tactile 3 qui sera perçu différemment d'une vibration de la surface tactile 3 obtenue en faisant osciller en phase les deux noyaux mobiles 13. On peut ainsi coder par exemple une acceptation ou un rejet de la commande sélectionnée par des motifs de vibrations différents.

## Revendications

1. Module d'interface (1) tactile à retour haptique comprenant une surface tactile (3) apte à détecter un appui d'un utilisateur, et au moins un actionneur relié à la surface tactile (3), apte à générer un retour haptique en fonction de l'appui détecté et comprenant :
- un châssis (11),
- un noyau mobile (13) coopérant avec le châssis (11), destiné à être entraîné en mouvement entre des positions extrémales pour générer le retour haptique, et
- des moyens d'actionnement électromagnétiques (15, 17) pour entraîner en mouvement le noyau mobile (13) ;
**caractérisé en ce que** l'actionneur comporte en outre un premier et un second moyens élastiques (19A et 19B) précontraints, respectivement disposés de part et d'autre du noyau mobile (13) et **en ce que** les premier et second moyens élastiques (19A et 19B) sont précontraints en compression, le noyau mobile (13) et le châssis (11) comportant des moyens de guidage par coopération de forme (33, 13), le noyau mobile (13) présentant une section en forme de E dont la branche centrale est enchâssée dans une portion à section en U correspondante du châssis (11).

2. Module d'interface (1) selon la revendication 1, **caractérisé en ce que** les premier et second moyens élastiques (19A et 19B) définissent une position de repos flottante du noyau mobile (13).

3. Module d'interface (1) selon la revendication 1 ou 2, **caractérisé en ce que** les premier et second moyens élastiques (19A et 19B) comportent des ressorts hélicoïdaux.

4. Module d'interface (1) selon la revendication 1, 2 ou 3, **caractérisé en ce que** les premier et second moyens élastiques (19A et 19B) comportent des lames ressort.

5. Module d'interface (1) selon l'une des revendications 1 à 4, **caractérisé en ce que** les premier et second moyens élastiques (19A et 19B) comportent un matériau élastique tel que de l'uréthane, un polymère expansé, un polymère réticulé ioniquement, ou du caoutchouc.

6. Module d'interface (1) selon l'une des revendications précédentes, **caractérisé en ce que** les premier et second moyens élastiques (19A et 19B) sont alignés sur l'axe qui est parallèle à la direction du mouvement du noyau mobile (13) et qui passe par son centre de gravité.

7. Module d'interface (1) selon l'une des revendications précédentes, **caractérisé en ce que** le noyau mobile (13) comporte au moins un aimant (17), et le châssis (11) comporte une bobine (15).

8. Module d'interface (1) selon l'une des revendications précédentes, **caractérisé en ce que** le châssis (11) est solidaire de la surface tactile (3), que le premier moyen élastique est relié à la surface tactile (3) d'une part et au noyau mobile (13) d'autre part, et le second moyen élastique est relié au châssis d'une part et au noyau mobile (15) d'autre part.

9. Module d'interface (1) selon l'une des revendications 1 à 7, **caractérisé en ce que** le châssis (11) comporte un couvercle (21) solidaire de la surface tactile (3), et **en ce que** le premier moyen élastique (19A) de l'actionneur est relié au couvercle (21) d'une part et au noyau mobile (13) d'autre part, et le second moyen élastique est relié au châssis (11) d'une part et au noyau mobile (13) d'autre part.

10. Module d'interface (1) selon l'une des revendications 1 à 7, **caractérisé en ce qu'**il comporte un bâti (5) solidaire du châssis (11), recevant la surface tactile (3) et l'actionneur, et **en ce que** le premier moyen élastique (19A) de l'actionneur est relié à la surface tactile (3) d'une part et au noyau mobile (13) d'autre part, et le second moyen élastique est relié au châssis (11) d'une part et au noyau mobile (13) d'autre part.

11. Module d'interface (1) selon l'une des revendications précédentes, **caractérisé en ce que** les premier et second moyens élastiques (19A et 19B) ont des raideurs différentes.

12. Module d'interface (1) selon l'une des revendications précédentes, **caractérisé en ce qu'**il comporte une pluralité d'actionneurs (9) et un contrôleur commun (37) pour leur actionnement.

## Patentansprüche

1. Berührungsempfindliches Schnittstellenmodul (1) mit haptischer Rückkopplung, umfassend eine berührungsempfindliche Oberfläche (3), die geeignet ist, ein Drücken eines Benutzers zu erfassen, und mindestens einen mit der berührungsempfindlichen Oberfläche (3) verbundenen Aktor, der geeignet ist, in Abhängigkeit von dem erfassten Drücken eine haptische Rückkopplung zu erzeugen, und umfasst:
- ein Gehäuse (11),
- einen mit dem Gehäuse (11) zusammenwirkenden mobilen Kern (13), der dazu bestimmt ist, zwischen Endlagen bewegt zu werden, um die haptische Rückkopplung zu erzeugen, und
- elektromagnetische Betätigungsmittel (15, 17), um den mobilen Kern (13) zu bewegen;
**dadurch gekennzeichnet, dass** der Aktor ferner ein erstes und ein zweites vorgespanntes elastisches Mittel (19A und 19B) umfasst, die beidseits des mobilen Kerns (13) angeordnet sind, und dass die ersten und zweiten elastischen Mittel (19A und 19B) auf Druck vorgespannt sind, wobei der mobile Kern (13) und das Gehäuse (11) Mittel zur formschlüssigen Führung (33, 13) umfassen, wobei der mobile Kern (13) einen E-förmigen Querschnitt aufweist, dessen mittlerer Schenkel in einem entsprechenden Abschnitt mit U-förmigem Querschnitt des Gehäuses (11) eingefasst ist.

2. Schnittstellenmodul (1) nach Anspruch 1, **dadurch gekennzeichnet, dass** die ersten und zweiten elastischen Mittel (19A und 19B) eine schwebende Ruhelage des mobilen Kerns (13) definieren.

3. Schnittstellenmodul (1) nach Anspruch 1 oder 2, **dadurch gekennzeichnet, dass** die ersten und zweiten elastischen Mittel (19A und 19B) Schraubenfedern umfassen.

4. Schnittstellenmodul (1) nach Anspruch 1, 2 oder 3, **dadurch gekennzeichnet, dass** die ersten und zweiten elastischen Mittel (19A und 19B) Blattfedern umfassen.

5. Schnittstellenmodul (1) nach einem der Ansprüche 1 bis 4, **dadurch gekennzeichnet, dass** die ersten und zweiten elastischen Mittel (19A und 19B) ein elastisches Material wie Urethan, ein geschäumtes Polymer, ein ionisch vernetztes Polymer oder Kautschuk umfassen.

6. Schnittstellenmodul (1) nach einem der vorhergehenden Ansprüche, **dadurch gekennzeichnet, dass** die ersten und zweiten elastischen Mittel (19A und 19B) auf die Achse ausgerichtet sind, die parallel zur Bewegungsrichtung des mobilen Kerns (13) ist und die durch seinen Schwerpunkt verläuft.

7. Schnittstellenmodul (1) nach einem der vorhergehenden Ansprüche, **dadurch gekennzeichnet, dass** der mobile Kern (13) mindestens einen Magneten (17) umfasst und das Gehäuse (11) eine Spule (15) umfasst.

8. Schnittstellenmodul (1) nach einem der vorhergehenden Ansprüche, **dadurch gekennzeichnet, dass** das Gehäuse (11) fest mit der berührungsempfindlichen Oberfläche (3) verbunden ist, dass das erste elastische Mittel auf der einen Seite mit der berührungsempfindlichen Oberfläche (3) und auf der anderen Seite mit dem mobilen Kern (13) verbunden ist und das zweite elastische Mittel auf der einen Seite mit dem Gehäuse und auf der anderen Seite mit dem mobilen Kern (15) verbunden ist.

9. Schnittstellenmodul (1) nach einem der Ansprüche 1 bis 7, **dadurch gekennzeichnet, dass** das Gehäuse (11) eine Abdeckung (21) umfasst, die fest mit der berührungsempfindlichen Oberfläche (3) verbunden ist, dass das erste elastische Mittel (19A) des Aktors auf der einen Seite mit der Abdeckung (21) und auf der anderen Seite mit dem mobilen Kern (13) verbunden ist und das zweite elastische Mittel auf der einen Seite mit dem Gehäuse (11) und auf der anderen Seite mit dem mobilen Kern (13) verbunden ist.

10. Schnittstellenmodul (1) nach einem der Ansprüche 1 bis 7, **dadurch gekennzeichnet, dass** es einen fest mit dem Gehäuse (11) verbundenen Rahmen (5) umfasst, der die berührungsempfindliche Oberfläche (3) und den Aktor aufnimmt, und dass das erste elastische Mittel (19A) des Aktors auf der einen Seite mit der berührungsempfindlichen Oberfläche (3) und auf der anderen Seite mit dem mobilen Kern (13) verbunden ist und das zweite elastische Mittel auf der einen Seite mit dem Gehäuse (11) und auf der anderen Seite mit dem mobilen Kern (13) verbunden ist.

11. Schnittstellenmodul (1) nach einem der vorhergehenden Ansprüche, **dadurch gekennzeichnet, dass** die ersten und zweiten elastischen Mittel (19A und 19B) unterschiedliche Steifigkeiten haben.

12. Schnittstellenmodul (1) nach einem der vorhergehenden Ansprüche, **dadurch gekennzeichnet, dass** es eine Vielzahl von Aktoren (9) und einen gemeinsamen Controller (37) zu ihrer Betätigung umfasst.

## Claims

1. Touch-sensitive interface module (1) with haptic feedback comprising a touch-sensitive surface (3) which is capable of detecting pressure from a user and at least one actuator which is connected to the touch-sensitive surface (3), which is capable of generating haptic feedback in accordance with the pressure detected and which comprises:
- a chassis (11),
- a movable core (13) which cooperates with the chassis (11) and which is intended to be driven in terms of movement between end positions in order to generate the haptic feedback, and
- electromagnetic actuation means (15, 17) in order to movingly drive the movable core (13);
**characterized in that** the actuator further comprises a first and a second pretensioned resilient means (19A and 19B) arranged at one side and the other of the movable core (13), respectively, and **in that** the first and second resilient means (19A and 19B) are pretensioned in terms of compression, the movable core (13) and the chassis (11) comprising means (33, 13) for guiding by means of form-fitting, the movable core (13) having an E-shaped cross section whose central branch is fitted in a corresponding portion of the chassis (11) having a U-shaped cross section.

2. Interface module (1) according to Claim 1, **characterized in that** the first and second resilient means (19A and 19B) define a floating rest position of the movable core (13).

3. Interface module (1) according to Claim 1 or 2, **characterized in that** the first and second resilient means (19A and 19B) comprise helical springs.

4. Interface module (1) according to Claim 1, 2 or 3, **characterized in that** the first and second resilient means (19A and 19B) comprise leaf springs.

5. Interface module (1) according to one of Claims 1 to 4, **characterized in that** the first and second resilient means (19A and 19B) comprise a resilient material, such as urethane, an expanded polymer, an ionically cross-linked polymer or rubber.

6. Interface module (1) according to one of the preceding claims, **characterized in that** the first and second resilient means (19A and 19B) are aligned with respect to the axis which is parallel with the movement direction of the movable core (13) and which extends via the centre of gravity thereof.

7. Interface module (1) according to one of the preceding claims, **characterized in that** the movable core (13) comprises at least one magnet (17) and the chassis (11) comprises a coil (15).

8. Interface module (1) according to one of the preceding claims, **characterized in that** the chassis (11) is fixedly joined to the touch-sensitive surface (3), **in that** the first resilient means is connected to the touch-sensitive surface (3), on the one hand, and to the movable core (13), on the other hand, and the second resilient means is connected to the chassis, on the one hand, and to the movable core (15), on the other hand.

9. Interface module (1) according to one of Claims 1 to 7, **characterized in that** the chassis (11) comprises a cover (21) which is fixedly joined to the touch-sensitive surface (3), and **in that** the first resilient means (19A) of the actuator is connected to the cover (21), on the one hand, and to the movable core (13), on the other hand, and the second resilient means is connected to the chassis (11), on the one hand, and to the movable core (13), on the other hand.

10. Interface module (1) according to one of Claims 1 to 7, **characterized in that** it comprises a frame (5) which is fixedly joined to the chassis (11) and which receives the touch-sensitive surface (3) and the actuator, and **in that** the first resilient means (19A) of the actuator is connected to the touch-sensitive surface (3), on the one hand, and to the movable core (13), on the other hand, and the second resilient means is connected to the chassis (11), on the one hand, and to the movable core (13), on the other hand.

11. Interface module (1) according to one of the preceding claims, **characterized in that** the first and second resilient means (19A and 19B) have different rigidities.

12. Interface module (1) according to one of the preceding claims, **characterized in that** it comprises a plurality of actuators (9) and a common controller (37) for the actuation thereof.
